# NEW EUROPEAN PATENT SPECIFICATION

(11) **EP 3 345 785 B2**
(45) Date of publication and mention of the opposition decision: **16.08.2023**
(45) Mention of the grant of the patent: 04.09.2019
(21) Application number: 18150206.3
(22) Date of filing: 03.01.2018
(51) Int. Cl.: B60N 2/34, A47C 17/80, B60P 3/32

(54) **CONVERTIBLE SEAT DEVICE FOR VEHICLES SUCH AS CARAVANS OR CAMPERS**
UMWANDELBARE SITZVORRICHTUNG FÜR FAHRZEUGE WIE WOHNMOBILE ODER CAMPERS
STRUCTURE DE SIEGE CONVERTIBLE POUR VEHICULES COMME DES CAMPING CARS OU AUTOCARAVANES

(30) Priority: 04.01.2017 IT 201700000808
(43) Date of publication of application: 11.07.2018
(73) Proprietor: Trigano VDL, 75019 Paris (FR)
(72) Inventor: DE GIACOMI, Alex, 25136 Brescia (IT)
(74) Representative: Novagraaf Technologies

(56) References cited:
- EP-A1- 1 226 998
- EP-A1- 2 460 686
- EP-A2- 2 025 552
- DE-A1-102010 028 210
- GB-A- 1 019 813
- GB-A- 191 408 693
- US-A1- 2005 067 870
- Public prior use of Chausson 630 camping van including Youtube video (https://www.https//youtube.com/watch?v=lh SOPECWcQ) and supporting documentation

## Description

The object of the present invention is a convertible seat device, in particular intended for use in recreational vehicles such as caravans and campers.

As is known, the living compartment of these vehicles is now provided with multiple accessories, so as to ensure users a high level of comfort, both during travel and during stops.

In such context, the equipment of the seating devices is particularly important and must be comfortable and safe in all conditions of use. All this, of course, must be combined with the need to reduce the overall dimensions to a minimum.

For these reasons, some convertible seating devices have been well known for some years. Such devices allow the conversion of a divan for the seating of two or more people, to be used during a stop, into a traditional seat for travel. An example of embodiment is illustrated in the document EP 2 025 552 A2, Another embodiment is disclosed in the document DE 10 2010 028 210 A1 according to the preamble of claim 1.

However, the known convertible seating devices present some drawbacks.

For example, some solutions have considerable bulk, in an area wherein space is of primary importance for housing additional accessories.

The object of the present invention is to overcome the drawbacks of the sector and at the same time satisfy the requirements mentioned above.

This object is achieved by a convertible seat device made in accordance with claim 1. The dependent claims define further embodiments of the invention.

The features and advantages of the convertible seat device according to the present invention will be apparent from the description given hereinafter, provided by way of non-limiting example, in accordance with the accompanying figures, wherein:
- figure 1 represents an embodiment of the seating device according to the present invention, in a divan configuration;
- figure 2 shows the seating device of figure 1, in an intermediate configuration;
- figure 3 illustrates the seating device of figure 2, in a seat configuration;
- figure 4 represents an embodiment of the seating device according to the present invention, in separate parts, in a seat configuration; and
- figure 5 illustrates the seating device of figure 4, with parts assembled.

With reference to the attached figures, a convertible seat device for use in a living compartment of a touring vehicle, such as a caravan or a camper, is indicated collectively at 1.

Suitably arranged in the living compartment, the device 1 identifies a direction of travel Z or longitudinal direction, which corresponds to the vehicle's direction of travel, and a transversal direction X, perpendicular to the direction of travel Z.

Usually, the device 1 is set against a side wall of the living compartment (which therefore extends along the direction of travel Z), while the transverse direction X is perpendicular to said side wall.

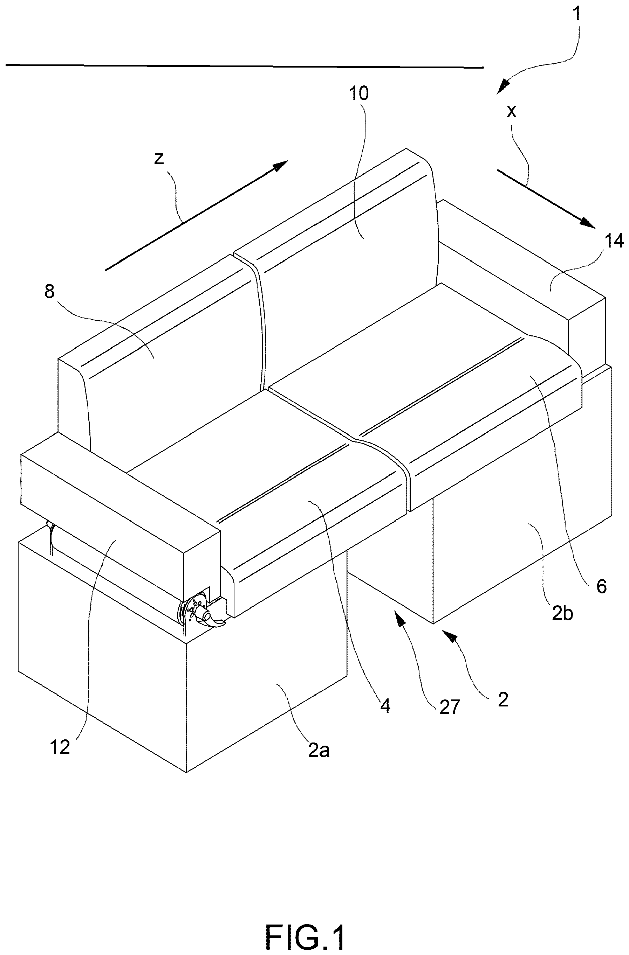

When the device 1 is in a divan configuration (figure 1), it extends mainly along the direction of travel Z, so that the seated user is placed in front of the side wall opposite to that to which the device 1 is set against.

The device 1 comprises a supporting structure 2 applied to the floor of the living compartment of the vehicle.

In particular, said structure 2 comprises a seat support structure 2a (typically made of sheet metal or tubular elements and covered with panels by the fitter of the vehicle) and a fixed support structure 2b (generally made by the fitter), for example made in the form of box-shaped elements applied to the floor of the living compartment and set against the side wall thereof.

In particular, the seat support structure 2a has a rear region 2a', distal along the direction of travel Z from the fixed structure 2b, and a front region 2a'', proximal along the direction of travel Z from the fixed structure 2b.

Preferably, the seat support structure 2a is spaced from the fixed support structure 2b along the direction of travel Z.

Moreover, the device 1 comprises a plurality of cushion elements applied, for example, resting, on the structure 2 and removable therefrom.

For example, seat cushion-elements 4, 6 are provided, for example two in number, respectively resting on the seat support structure 2a and the fixed support structure 2b, structured and shaped so as to provide a stable seat for a user.

In addition, preferably, backrest cushion-elements 8, 10 are provided, for example two in number, respectively resting on the seat support structure 2a and the fixed support structure 2b, and on the side wall of the living compartment, structured and shaped so as to make a backrest for a user.

Preferably, moreover, armrest cushion-elements 12, 14 are provided, for example two in number, respectively resting on the seat support structure 2a and on the fixed support structure 2b, between which are arranged the seat cushion-elements 4, 6 and the backrest cushion-elements 8, 10, structured and shaped to make the armrests.

Overall, the device 1, provided with said cushion-elements 4, 6, 8, 10, 12, 14 assumes the configuration of a divan set against the side wall of the living compartment.

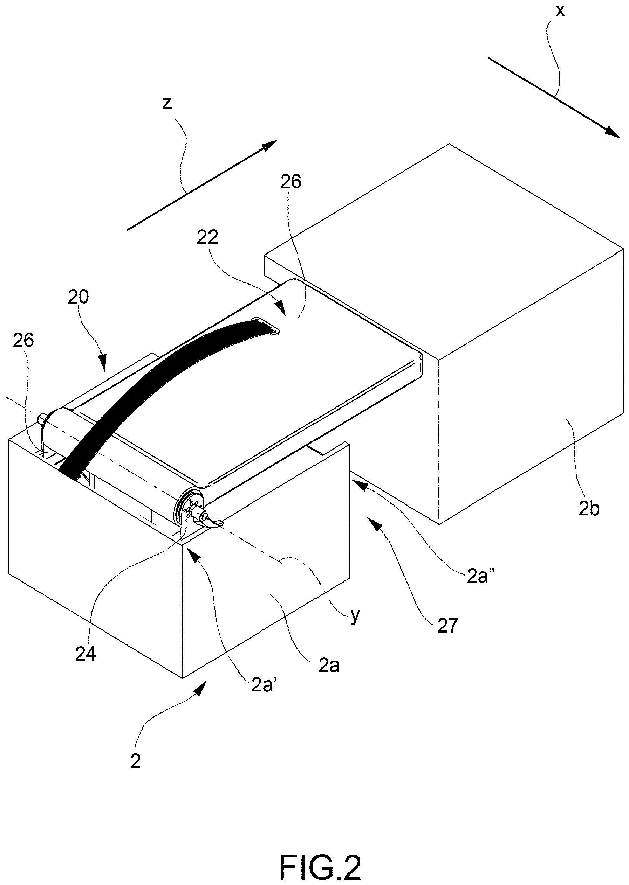

For converting the device 1, the cushion-elements 4, 6, 8, 10, 12, 14 are removed (figure 2).

The device 1 comprises a backrest group 20 supported by the seat support structure 2a.

In particular, the backrest group 20 comprises a backrest element 22, suitable to provide support for a user, and means for connecting with hinging between the backrest element and the seat support structure 2a.

Said connection means comprise, for example, a pair of plates 24, 26 which may be connected to the seat support structure 2a, to which the backrest element 22 is hinged.

The backrest element 22 is thus rotatable about a hinge axis Y parallel to the transverse direction X, arranged at the rear region 2a' of the seat support structure 2a.

In a lowered configuration (figure 2), the backrest element 22 is arranged substantially horizontally; in other words, said backrest element 22 extends substantially along the direction of travel Z, from the hinge axis Y towards the fixed structure 2b.

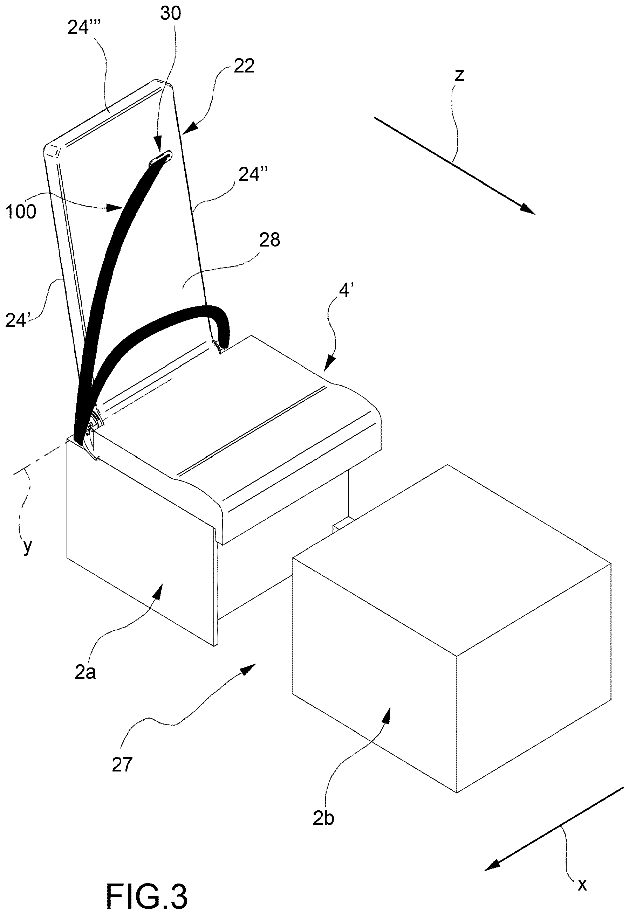

In a raised configuration (figure 3), the backrest element 22 is in a rotated position relative to that of the lowered configuration and projects substantially vertically from the backrest support structure 2a.

The backrest element 22 is composed of a substantially rectangular unitary element, preferably rounded at the corners, delimited by sides 24', 24" and a substantially straight top edge 24"'; at the bottom edge, however, it is hinged to the backrest support structure 2a.

Consequently, in the lowered configuration, the backrest element 22 has a substantially rectangular rear side 26 facing upwards, on which rests, for example with shape-coupling, the seat cushion-element 4.

In the raised configuration, the backrest element 22 faces a substantially flat front side 28, i.e. flat, except for in the region of the hinge axis Y, toward the fixed support structure 2b.

In the seat configuration (figure 3), the backrest element 22 is in the raised configuration and a further seat cushion-element 4' is applied to the backrest support structure 2a, so as to provide a seat which allows the user to face in the direction of travel Z.

Preferably, the further seat cushion-element 4' is the same seat cushion-element 4 used in the divan configuration.

In said seat configuration, advantageously, the distance between the backrest support structure 2a and the fixed support structure 2b along the direction of travel Z creates a space 27 for the legs of the user.

Preferably, moreover, the seat element 22 comprises a through opening 30, vertically proximal to the bottom edge 24'" and laterally spaced from the side 24", for the passage of a safety belt 100.

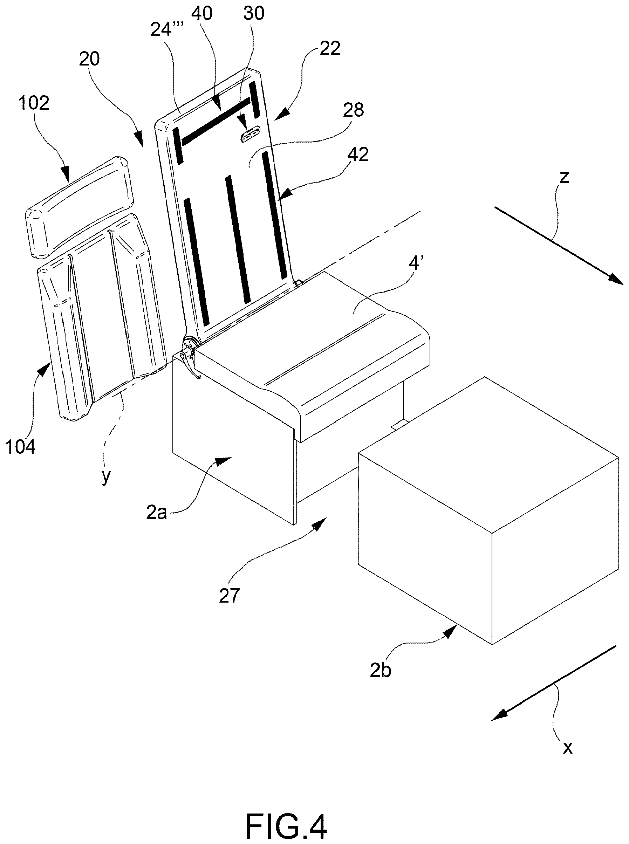

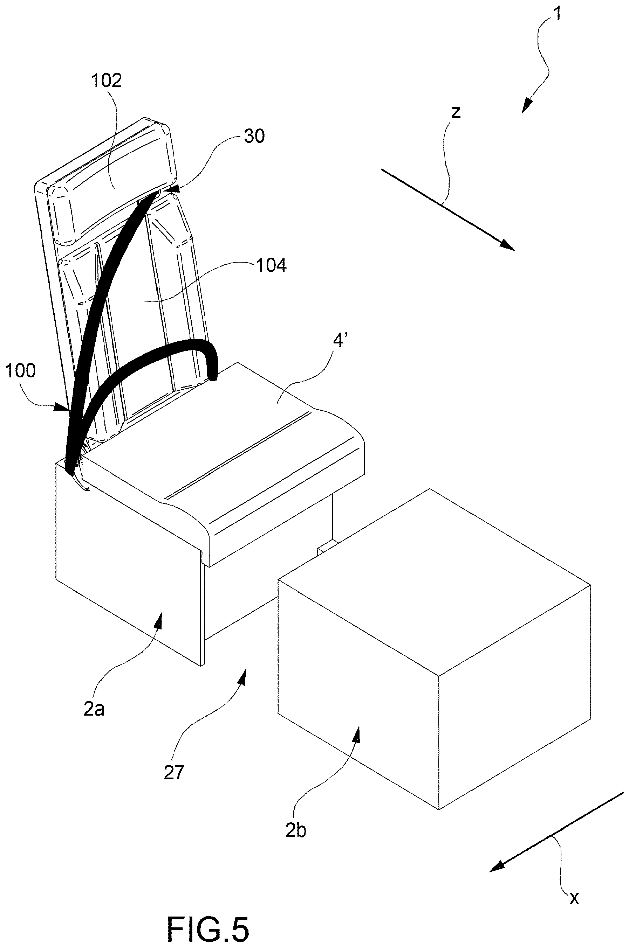

According to a further embodiment (figures 4 and 5), the device 1 comprises at least one backrest shape, and the backrest group 20 comprises application means for the removable application of said backrest shape to the backrest element 22.

For example, a backrest head shape 102 and a backrest torso shape 104 are provided to restrain respectively the user's head and torso.

Said application means are intended for the application of said shapes 102, 104 on the front side 28 of the backrest element 22.

For example, said application means are arranged on said front side 28 and preferably comprise a plurality of application regions, for example made of Velcro^{®}, for the tear-off application of the shapes 102, 104.

For example, said application means comprise an upper application region 40, extending above the opening 30, between said opening 30 and the top edge 24"', intended for the application of the head backrest shape 102, and a lower application region 42, which extends below the opening 30, intended for the application of the backrest torso shape 104.

The convertible seat device according to the present invention allows some of the drawbacks of the known art to be overcome, since in the divan configuration a residual space is left, usable for example for positioning a water tank, a heater or other accessories or devices for operating the vehicle.

## Claims

1. Convertible seat device (1) for vehicles having a living compartment, such as caravans or campers, comprising:
- a support structure (2) suitable to be fixed to a floor of the living compartment of the vehicle, comprising a seat support structure (2a) and a fixed support structure (2b) ;
- a backrest group (20) supported by the seat support structure (2a), comprising a backrest element (22) connected to the seat support structure (2a) in a rotatable manner around a hinge axis (Y) orthogonal to the direction of travel (Z) and parallel to a transverse direction (X), when in use in the vehicle, between a lowered configuration, wherein it is arranged substantially horizontal to arrange the seat in the transverse direction (X) orthogonal to the direction of travel (Z) of the vehicle, and a raised configuration wherein it projects vertically from the structure (2) to form the backrest of a seat utilizable in the direction of travel (Z);
- wherein the backrest element (22) has a substantially rectangular shape, with a rear side (26) facing upwards in the lowered configuration and a front side (28) substantially flat, facing in the direction of travel (Z) in the raised configuration;
- wherein the seat support structure (2a) is spaced from the fixed support structure (2b) along the direction of travel (Z) to make a space (27),
**characterised in that** the front side (28) is flat except in the region of the hinge axis (Y).

2. Seat device according to claim 1, comprising a plurality of cushion-elements (4,6; 8,10; 12,14) positioned on the support structure (2) to make a divan utilizable for the seat in the transverse direction (X), said cushion-elements being removable from said structure (2) .

3. Seat device according to any of the preceding claims, wherein the backrest element (22) is defined by sides (24', 24'') and by a substantially rectilinear top edge (24‴) and is hinged to the backrest support structure (2a) at a bottom edge.

4. Device according to any of the preceding claims, wherein the seat element (22) comprises an opening (30) passing between the front side (28) and the rear side (26), vertically next to a top edge (24‴) of the seat element (22) and laterally spaced from a side (24") of the seat element (22), for the passage of a seat belt (100) .

5. Seat device according to any of the preceding claims, comprising at least one backrest shape (102, 104), where the backrest group (20) comprises removable application means for the application of said backrest shape to the backrest element (22).

6. Device according to claim 5, wherein said at least one backrest shape comprises a backrest head shape (102) and a backrest torso shape (104), to restrain respectively the user's head and torso.

7. Device according to claim 5 or 6, wherein said removable application means are intended for the application of said shapes (102,104) on the front side (28) of the backrest element (22).

8. Device according to claim 7, wherein said removable application means are arranged on said front side (28) and comprise at least one application region (106,108) for the hook-and-loop fastener application of the shapes (102,104) .

## Patentansprüche

1. Umwandelbare Sitzvorrichtung (1) für Fahrzeuge mit einem Wohnabteil, wie z.B. Wohnwagen oder Wohnmobile, umfassend: -
eine Trägerstruktur (2), die an einem Boden des Wohnraums des Fahrzeugs befestigt werden kann und eine Sitzträgerstruktur (2a) und eine feste Trägerstruktur (2b)
umfasst; -
eine Rückenlehnengruppe (20), die von der Sitzträgerstruktur (2a) getragen wird, mit einem Rückenlehnenelement (22), das mit der Sitzträgerstruktur (2a) drehbar um eine zur Fahrtrichtung (Z) orthogonale Gelenkachse (Y) verbunden ist, wenn es im Fahrzeug verwendet wird, zwischen einer abgesenkten Konfiguration, in der es im Wesentlichen horizontal angeordnet ist, um den Sitz in einer Querrichtung (X) orthogonal zur Fahrtrichtung (Z) des Fahrzeugs anzuordnen, und einer angehobenen Konfiguration, in der es vertikal von der Struktur (2) vorsteht, um die Rückenlehne eines in Fahrtrichtung (Z) nutzbaren Sitzes zu bilden; -
wobei das Rückenlehnenelement (22) eine im Wesentlichen rechteckige Form hat, mit einer hinteren Seite (26), die in der abgesenkten Konfiguration nach oben weist, und einer vorderen Seite (28), die im Wesentlichen flach ist und in der angehobenen Konfiguration in die Fahrtrichtung (Z) weist;
- wobei die Sitzträgerstruktur (2a) von der festen Trägerstruktur (2b) entlang der Fahrtrichtung (Z) beabstandet ist, um einen Zwischenraum (27) zu bilden,
**dadurch gekennzeichnet, dass** die vordere Seite (28) außer im Bereich der Gelenkachse (Y) flach ist.

2. Sitzvorrichtung nach Anspruch 1, umfassend eine Vielzahl von Polsterelementen (4, 6; 8, 10; 12, 14), die auf der Trägerstruktur (2) angeordnet sind, um eine Liege zu bilden, die für den Sitz in der Querrichtung (X) verwendbar ist, wobei die Polsterelemente von der Struktur (2) abnehmbar sind.

3. Sitzvorrichtung nach einem der vorhergehenden Ansprüche, wobei das Rückenlehnenelement (22) durch Seiten (24', 24") und durch eine im wesentlichen geradlinige Oberkante (24‴) definiert ist und an einer Unterkante an der Rückenlehnenträgerstruktur (2a) angelenkt ist.

4. Vorrichtung nach einem der vorhergehenden Ansprüche, wobei das Sitzelement (22) eine Öffnung (30) aufweist, die zwischen der Vorderseite (28) und der Rückseite (26) vertikal neben einer Oberkante (24‴) des Sitzelements (22) und seitlich beabstandet von einer Seite (24") des Sitzelements (22) verläuft, um einen Sicherheitsgurt (100) durchzulassen.

5. Sitzvorrichtung nach einem der vorhergehenden Ansprüche, mit mindestens einer Rückenlehnenform (102, 104), wobei die Rückenlehnengruppe (20) eine abnehmbare Anbringungseinrichtung zum Anbringen der Rückenlehnenform an dem Rückenlehnenelement (22) aufweist.

6. Vorrichtung nach Anspruch 5, wobei die mindestens eine Rückenlehnenform eine Rückenlehnenkopfform (102) und eine Rückenlehnentorsoform (104) umfasst, um den Kopf bzw. den Torso des Benutzers zu stützen.

7. Vorrichtung nach Anspruch 5 oder 6, wobei die abnehmbaren Anbringungsmittel für die Anbringung der Formen (102, 104) an der Vorderseite (28) des Rückenlehnen Elements (22) vorgesehen sind.

8. Vorrichtung nach Anspruch 7, wobei die abnehmbaren Anbringungsmittel auf der Vorderseite (28) angeordnet sind und mindestens einen Anbringungsbereich (106, 108) für die Anbringung der Formen (102, 104) mit Hilfe eines Bügelverschlusses umfassen.

## Revendications

1. Dispositif de siège convertible (1) pour les véhicules ayant un compartiment habitable, tels que les caravanes ou les camping-cars, comprenant : -
une structure de support (2) apte à être fixée au plancher du compartiment habitable du véhicule, comprenant une structure de support de siège (2a) et une structure de support fixe (2b) ; -
un groupe de dossiers (20) supporté par la structure de support du siège (2a), comprenant un élément de dossier (22) relié à la structure de support du siège (2a) de manière rotative autour d'un axe d'articulation (Y) orthogonal à la direction de déplacement (Z), lorsqu'il est utilisé dans le véhicule, entre une configuration abaissée et une configuration horizontale, dans laquelle il est disposé sensiblement à l'horizontale de manière à pouvoir être utilisé dans le véhicule, dans laquelle il est disposé sensiblement à l'horizontale pour disposer le siège dans une direction transversale (X) orthogonale à la direction de déplacement (Z) du véhicule, et une configuration relevée dans laquelle il fait saillie verticalement à partir de la structure (2) pour former le dossier d'un siège utilisable dans la direction de déplacement (Z) ; - dans lequel l' élément de dossier (22) a une forme sensiblement rectangulaire, avec une face arrière (26) orientée vers le haut dans la configuration abaissée et une face avant (28) sensiblement plate, orientée dans le sens de la marche (Z) dans la configuration relevée;
- dans lequel la structure de support de siège (2a) est espacée de la structure de support fixe (2b) le long du sens de la marche (Z) pour former un espace (27),
**caractérisé en ce que** la face avant (28) est plate sauf dans la région de l'axe de la charnière (Y).

2. Dispositif de siège selon la revendication 1, comprenant une pluralité d'éléments de coussin (4,6 ; 8,10 ; 12,14) positionnés sur la structure de support (2) pour former un divan utilisable pour le siège dans la direction transversale (X), lesdits éléments de coussin étant amovibles de ladite structure (2).

3. Dispositif de siège selon l'une quelconque des revendications précédentes, dans lequel l'élément de dossier (22) est défini par des côtés (24', 24") et par un bord supérieur sensiblement rectiligne (24‴) et est articulé à la structure de support de dossier (2a) au niveau d'un bord inférieur.

4. Dispositif selon l'une quelconque des revendications précédentes, dans lequel l'élément de siège (22) comprend une ouverture (30) passant entre le côté avant (28) et le côté arrière (26), verticalement à côté d'un bord supérieur (24‴) de l'élément de siège (22) et latéralement à distance d'un côté (24") de l'élément de siège (22), pour le passage d'une ceinture de sécurité (100).

5. Dispositif de siège selon l'une quelconque des revendications précédentes, comprenant au moins une forme de dossier (102, 104), le groupe de dossier (20) comprenant des moyens d'application amovibles pour l'application de ladite forme de dossier à l'élément de dossier (22).

6. Dispositif selon la revendication 5, dans lequel ladite au moins une forme de dossier comprend une forme de dossier de tête (102) et une forme de dossier de torse (104), pour retenir respectivement la tête et le torse de l'utilisateur.

7. Dispositif selon la revendication 5 ou 6, dans lequel lesdits moyens d'application amovibles sont destinés à l'application desdites formes (102, 104) sur la face avant (28) de l'élément de dossier (22).

8. Dispositif selon la revendication 7, dans lequel lesdits moyens d'application amovibles sont disposés sur ladite face avant (28) et comprennent au moins une zone d'application (106, 108) pour l'application des formes (102, 104) à l'aide de boucles- et-crochets.
